# EUROPEAN PATENT APPLICATION

(11) **EP 4 826 561 A1**
(43) Date of publication of application: **21.10.2026**
(21) Application number: 26165127.7
(22) Date of filing: 16.03.2026
(51) Int. Cl.: G06F 16/18, G06F 16/188

(54) **POLYMORPHIC PLACEHOLDERS FOR FILE SYSTEMS**

(30) Priority: 15.04.2025 US 202519180069
(71) Applicant: Microsoft Technology Licensing, LLC, Redmond, WA 98052-6399 (US)
(72) Inventor: SHAH, Hardik Rajiv, Redmond, 98052-6399 (US)
(74) Representative: Page White Farrer

(57) **Abstract**

Information is received indicating a plurality of files that are determined to be associated with a user's computing activity in the computing system and meet a criterion for being variants of one another. A polymorphic placeholder is generated that corresponds to the plurality of files. The plurality of files are selected based on a threshold relevance to the criterion, and the plurality of files are abstracted from underlying storage locations in the computing system.

## Description

### BACKGROUND

Computing systems have built-in file management applications that enable users to navigate, organize, and manage files and folders. A graphical user interface (GUI) is typically provided to access local storage as well as cloud storage (e.g., OneDrive). Users can add new files or folders as desired, without limitation or restriction so long as there is sufficient space. It is with respect to these and other considerations that the disclosure made herein is presented.

### SUMMARY

In cloud file systems, such as OneDrive by Microsoft, users often create multiple variations of a file that proliferates the number of redundant or overlapping files, such as multiple versions of a file (e.g., _v1, _v2, _draft), file variants (e.g., PNG, RAW, PDF) of the same file, and automatically generated snapshots (e.g., applications that automatically save intermediate versions). Many of such variations are not used after they are created, and yet such variations are desirable to keep in case they are needed. These redundant and overlapping files can clutter the file system and reduce overall storage efficiency.

While such redundant and overlapping files provide useful history or flexibility to the user, they often lead to unnecessary redundancy and clutter in the user's storage environment. Managing these redundant files can be cumbersome, and users are typically forced to either manually manage the multiple versions or rely on external tools. Currently, file systems lack an efficient and user-transparent method of managing and consolidating these redundant files. It is desirable to consolidate or represent the redundant files in a way that streamlines the user experience and reduces file clutter without sacrificing file version control or access.

The present disclosure describes techniques for creating polymorphic file placeholders in cloud file systems. These polymorphic placeholders consolidate multiple file versions and variants into a single placeholder that dynamically presents file options to the user when the user accesses the polymorphic placeholder, thereby reducing redundancy and improving file management. When files are grouped into a polymorphic placeholder, users can access any version or variant of the file directly through the placeholder. In an embodiment, a polymorphic placeholder system leverages file system filters and cloud synchronization to ensure that the correct file version is downloaded, opened, or replaced based on the user's selection.

The embodiments disclosed herein can increase the reliability and performance of cloud-based productivity platforms by enabling efficient management of user files and their variations, and mitigate data loss and other errors when the user cannot access the current and relevant file. More efficient and timely processes for file management, in turn, result in better performing computing devices that utilize fewer processor cycles, less memory, and less power. Other technical benefits not specifically mentioned herein can also be realized through implementations of the disclosed subject matter.

These and various other features will be apparent from a reading of the following Detailed Description and a review of the associated drawings. This Summary is provided to introduce a selection of concepts in a simplified form that are further described below in the Detailed Description. Furthermore, the claimed subject matter is not limited to implementations that solve any or all disadvantages noted in any part of this disclosure.

### BRIEF DESCRIPTION OF THE DRAWINGS

The Detailed Description is described with reference to the accompanying figures. In the figures, same reference numbers in different figures indicate similar or identical items.
FIGURE 1A illustrates an example architecture in accordance with the present disclosure.
FIGURE 1B illustrates an example architecture in accordance with the present disclosure.
FIGURE 2 illustrates an example architecture in accordance with the present disclosure.
FIGURE 3 illustrates an example procedure in accordance with the present disclosure.
FIGURE 4 illustrates an example architecture in accordance with the present disclosure.

### DETAILED DESCRIPTION

The following Detailed Description describes technologies for implementing polymorphic placeholders in a file system. The polymorphic placeholders can be implemented in various environments including individual systems, distribution systems, cloud-based systems, and the like. The polymorphic placeholders represent one or more files, where "polymorphic" generally refers to files that exist in multiple different forms, variations, or versions, in many cases originating from a single source file.

In many cases, a user may have multiple versions of the same document (_v1, _v2, _draft, _final). The user generally only needs to keep the most relevant version, but would still like to maintain version history and access earlier versions if required. For example, a designer or photographer may have multiple variants of an image (RAW, PNG) and PDF versions of documents, resulting in clutter when they are no longer needed, thus consuming unnecessary disk usage. As another example, the RAW file is rarely needed after editing but nevertheless needs to be retained, which consumes additional disk space.

In an embodiment, a polymorphic placeholder is implemented that groups related files (e.g., different versions or variants of the same content) into a polymorphic placeholder. In an embodiment, related files are grouped into a polymorphic placeholder based on various conditions or rules, such as common naming conventions (e.g., _v1, _v2, _draft, etc.), metadata (e.g., file types, creation date), or an AI-based grouping that considers user behavior and file usage patterns.

The files linked to a polymorphic placeholder may not be visible to the user but are tracked by the cloud provider for local and cloud changes. In an embodiment, the cloud provider adds specific tag data (e.g., reparse tags) to these placeholders to identify the files linked to the polymorphic placeholder. The linked files may be in a hidden state, but the cloud provider can add specific tag data/metadata to identify the linked files.

When a user attempts to access a polymorphic placeholder, a file system filter intercepts the call, identifies the linked file via the tag data/metadata, and forwards the call to the cloud file provider. Depending on user settings, the cloud file provider provides options that allow the user to identify which linked file the user wants to access or select a particular file based on some rules that the user has defined (e.g., the latest version always).

The cloud file provider then downloads the data for that file or uses a cached version, and populates the placeholder, similar to a hydration mechanism of a typical placeholder file. The user may also be provided the option to view the list of linked files via a context menu. In an embodiment, the context menu can be integrated with the file explorer application. The cloud file provider keeps track of which linked file has been accessed via the polymorphic placeholder and changes to that file are uploaded and saved. The cloud file provider may also continue synchronizing the changes of the last opened linked file to support offline availability. In case of creation of a new file version, that file is uploaded to the cloud and then made available via the polymorphic placeholder to ensure that there is no data loss.

In an embodiment, when a user deletes a file (either via the cloud or via an application), the file system filter/cloud provider intercepts the deletion request and determines whether the file is part of a polymorphic placeholder group. If the file is part of a polymorphic placeholder group, the specific version or variant is removed from the group. If no files remain in the group, the polymorphic placeholder itself can be deleted. Otherwise, the polymorphic placeholder is updated to reflect the removal of the version/variant.

In an embodiment, the polymorphic placeholder system manages file renaming, ensuring that renamed files are correctly added to the existing polymorphic placeholder group or prompt for the creation of a new polymorphic placeholder if necessary. In an embodiment, the polymorphic placeholder system also manages file movement, such as if the user moves the file from the current location to a new location.

In an embodiment, users can define rules regarding which file versions or variants should be used by default, such as:
- Always access the most recent version.
- Prefer specific file types (e.g., RAW files over PNG).

In an embodiment, files for inclusion with a polymorphic placeholder can be determined using information from the file system, which typically keeps track of files using various structures and indexes. Such structures and indexes can include file tables that include metadata including file names and location, indexed directories and databases, journals and the like.

In an embodiment, an agent or service can be executed that detects files that may be candidates for inclusion in a polymorphic placeholder and determines if a criterion is met for inclusion, as discussed herein. In an embodiment, AI can be integrated to intelligently group files based on historical access patterns, metadata, file names, and file content. This enhances the user experience by automatically managing files in ways that are contextually relevant to the user and provide timely polymorphic placeholders as variations are generated.

By consolidating redundant file versions and variants into a single polymorphic placeholder, the disclosed embodiments minimize clutter in the file system and streamlines file management. The user can access any version or variant of a file without navigating through multiple redundant files, simplifying their interaction with the cloud file system. The disclosed embodiments reduce the need to store multiple physical copies of the same content, improving overall storage efficiency and minimizing wasted space.

Additionally, the disclosed embodiments allow users to interact with their files as before, with polymorphic placeholders operating in the background, without the need for manual file management. The use of file system filters and cloud synchronization ensures that the disclosed techniques can scale to handle large numbers of files and complex file versioning/variant structures without requiring significant changes to the underlying file system or cloud storage infrastructure.

In some embodiments, the disclosed polymorphic placeholder feature can be a configurable option for the user. In one embodiment, the user can be provided the option to only generate polymorphic placeholders for selected contexts, such as files associated with a given project or organization, or for a specified time period. Various levels of granularity can be provided for the user to specify when the polymorphic placeholder feature should be invoked. Optionally, the user can be provided the option to revert a polymorphic placeholder to the original unlinked files. In some embodiments, the user can select settings including whether to generate polymorphic placeholders, when to generate polymorphic placeholders, and how long to maintain the polymorphic placeholders.

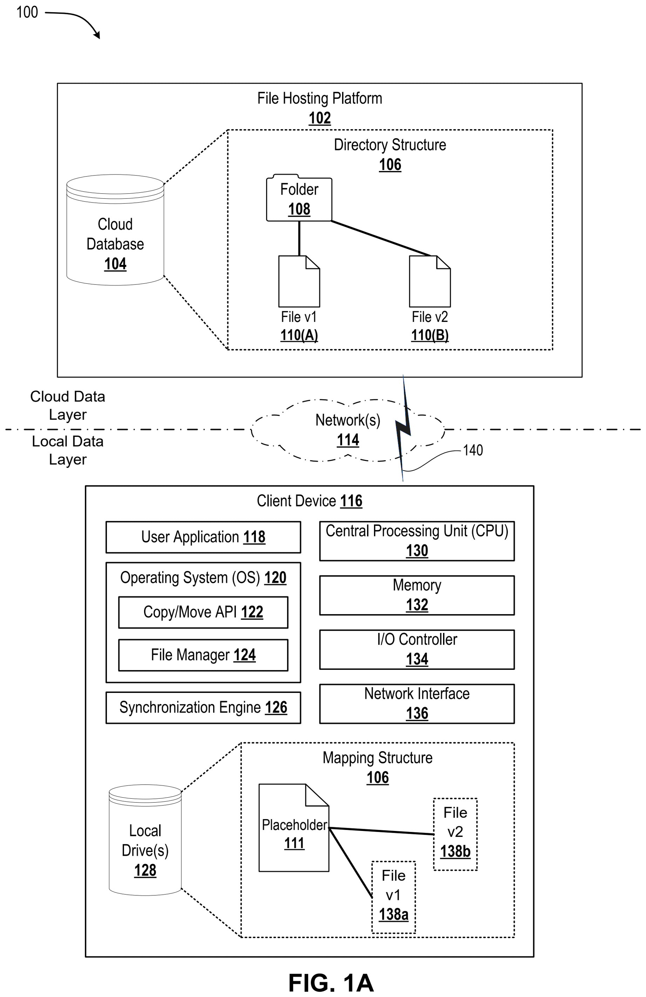

Referring to FIG. 1A, illustrated is an example system 100 including a client device 116 and a file hosting platform 102 configured to maintain copies of files in a cloud database 104. The client device 116 may have a file I/O manager. Users may create multiple versions of a file such as file v1 110(a) and file v2 110(b) in a folder 108. A placeholder file 111 can be created at the client device 116 via a mapping structure 106 at a local drive 128 (e.g., a SATA-type solid-state hard drive and/or any other suitable drive-type) of the client device 116. The system 100 may cause the file hosting platform 102 to maintain content data for the files represented in placeholder file 111 within the cloud database 104, depending on where the folders are located. Example file hosting platforms 102 include, but are not limited to, DROPBOX, GOOGLE DRIVE, AMAZON DRIVE, and/or MICROSOFT ONEDRIVE.

In some embodiments, the file hosting platform 102 may include a directory structure 106 for storing data associated with one or more files or folders 108 within the cloud database 104. As used herein, the term "directory structure" may refer generally to any scheme with which a file system may cause files to be displayed to a user. An example directory structure includes, but is not limited to, an electronic folder structure. In the specific embodiment of FIG. 1A, the directory structure 106 may include one or more folders 108 at which one or more files or folders 110(A) and 110(B) are stored. As used herein, the term "folder" may refer to a directory defined in a hierarchical file system cataloging structure and may include references to individual ones of the one or more files 110 and/or other folders 108.

As used herein, the term "hydrated" may be used as a descriptive term to indicate that an instance of a file 110 or folder 108 at a particular storage location (e.g., the cloud database 104, the local drive 128, etc.) has its corresponding content data also stored at the particular storage location. For example, in the illustrated example, the instance of the file 110 or folder 108 that is stored in the cloud database 104 can be described as a hydrated file or folder since its corresponding content data is also stored within the cloud database 104.

As used herein, the term "dehydrated" may be used as a descriptive term to indicate that an instance of the files 110 at a particular storage location does not have its corresponding file content data also stored at the particular location. For example, in the illustrated example, the instance of the file 138 that is stored in the local drive 128 can be described as a dehydrated file or folder since its corresponding content data is absent from the local drive 128.

An example dehydrated file may be a file or folder that is stored on the local drive 128 solely as metadata so that the client device 116 can display a file-browser GUI that enables the user to perform certain actions at the client device 116 which do not require accessing content data such as, for example, viewing properties of the dehydrated file or folder, moving the dehydrated file or folder within the directory structure 106, deleting the dehydrated file or folder from the directory structure 106 which may or may not trigger hydration depending on the type of delete, or any other operations that may be performed without accessing content data. When the user attempts to open a particular dehydrated file, the system 100 may automatically fetch corresponding content data from the cloud database 104. Stated alternatively, a dehydrated file or folder may remain "dehydrated" at the client device 116 (e.g., to save local storage space) until a user requests access to the dehydrated file or folder (e.g., by double clicking a file icon to open the dehydrated file) at which time, in some embodiments, the dehydrated file may be automatically "hydrated" on demand by downloading its content data. In this way, the dehydrated files do not take up substantial space on the client device 116 because the size of a dehydrated file may be limited to its corresponding metadata footprint.

In some embodiments, the client device 116 may include a user application 118 that provides access to the one or more files 138 in accordance with the directory structure 106. For example, the user application 118 may cause the client device 116 to display a file-browser graphical user interface (GUI) that enables a user to navigate through the directory structure 106. As a more specific but nonlimiting example, the user application 118 may cause the client device to display graphical folder representations for placeholder 111 and may further display file icons within the graphical folder representations to enable the user to view the status of files 138, and in some embodiments, to open, move, delete, or copy files contained within the placeholder 111. Files 138 in this example include individual files 138A and 138B which are determined to be associated with a user's computing activity in the client device 116 and meet a criterion for being variants of one another. In an embodiment, the files 138 are rendered as icons and can include the associated file names. In some embodiments, the user can select various viewing options that can further provide additional file details such as location, last modified, etc. In some cases, multiple files that have the same file name but stored in different locations can be identified.

In some embodiments, the user application 118 may communicate with one or more components of an operating system (OS) 120 for the purpose of displaying the file-browser GUI and/or for facilitating the generation of selection data that indicates a file 110 or folder 108 and a destination path within the directory structure 106 to copy or move the file or folder 110 to. The OS 120 may be any suitable system software for managing computer hardware and/or software resources and for providing services to the user application 118 and/or other applications (not shown). An example OS 120 may include, but is not limited to, various versions of MICROSOFT WINDOWS (e.g., WINDOWS 10, etc.) and/or various versions of macOS.

In some examples, the user application 118 may communicate with a file manager 124 of the OS 120. Example file managers include, but are not limited to, the FILE EXPLORER component of MICROSOFT WINDOWS and/or the FINDER component of the family of MACINTOSH operating systems developed by APPLE, INC. In some examples, the user application 118 may communicate with a copy/move application programming interface (API) 122 of the OS 120. The copy API 122 may be an abstraction of a data reading functionality that causes the client device 116 to read data from a specified file or folder and a data writing functionality that causes the client device 116 to write data to a specified destination path. In some embodiments, a move may be implemented as a reparent. Example user applications 118 include, but are not limited to, desktop client applications that are specifically configured to communicate with the file hosting platform 102 (e.g., the DROPBOX APP desktop application developed by DROPBOX, and/or, the ONEDRIVE desktop client). Accordingly, it can be appreciated that in various implementations the user application 118 may be configured to maintain a local instance of the directory structure 106 and to enable the user to browse through the local instance of the directory structure 106 without continuously communicating with the file hosting platform 102.

In some implementations, the client device 116 may include a synchronization engine 126 for synchronizing the local instance of the directory structure 106 that resides at the client device 116 with a cloud instance of the directory structure 106 that resides on the cloud database 104. Example synchronization engines 126 include, but are not limited to, SYNCHRONIZATION API developed by DROPBOX, BACKUP AND SYNCHRONIZATION developed by GOOGLE, and the ONEDRIVE sync engine. Accordingly, it can be appreciated that the synchronization engine 126 may be a native component of the OS 120 or may be an add-on component that is downloaded and installed onto the client device 116 separate from the OS 120.

In various implementations, the synchronization engine 126 is configured to provide access to at least some files 110 or folders 108 stored in the cloud database 104 without downloading the content data corresponding to these files or folders to the local drive 128. For example, the synchronization engine 126 may maintain a local directory structure (e.g., an instance of the directory structure 106 that resides on the client device 116) that includes a set of dehydrated files or folders associated with first content data that is absent from the local drive 128. In such an example, a cloud directory structure (e.g., an instance of the directory structure 106 that resides on the file hosting platform 102) may include hydrated counterparts for individual dehydrated files of the set of dehydrated files. Accordingly, a user may be able to see icons and/or other data associated with dehydrated files or folders in the file-browser GUI just like any other file or folder stored on the client device 116. In some implementations, when a user instructs the OS 120 to open a particular dehydrated file, the synchronization engine 126 automatically downloads the content data that corresponds to the particular dehydrated file or folder. For example, upon a user instructing the OS 120 to open the "dehydrated" instance of the file 110 stored on the local drive 128, the synchronization engine 126 may automatically begin communicating with the file hosting platform 102 to download the content data that corresponds to the file 110.

As further illustrated, the client device 116 includes a central processing unit ("CPU") 130 that is connected, via a bus (not shown), to various components such as the local drive 128, a memory 132, an input/output (I/O) controller 134, and/or a network interface 136. It can be appreciated that the system components described herein (e.g., the user application 118, the OS 120, and/or the synchronization engine 126) may, when loaded into the CPU 130 and executed, transform the CPU 130 and the overall client device 116 from a general-purpose computing system into a special-purpose computing system customized to facilitate the functionality presented herein. The CPU 130 may be constructed from any number of transistors or other discrete circuit elements, which may individually or collectively assume any number of states. More specifically, the CPU 130 may operate as a finite-state machine, in response to executable instructions contained within the software modules disclosed herein. These computer-executable instructions may transform the CPU 130 by specifying how the CPU 130 transitions between states, thereby transforming the transistors or other discrete hardware elements constituting the CPU 130.

The local drive 128 and associated computer-readable media provide non-volatile storage for the client device 116. Although the description of computer-readable media contained herein refers to a mass storage device, such as a solid-state drive and/or a hard disk, it should be appreciated by those skilled in the art that computer-readable media can be any available computer storage media or communication media that can be accessed by a computing architecture such as, for example, the system 100. Communication media includes computer-readable instructions, data structures, program modules, and/or other data in a modulated data signal such as a carrier wave or other transport mechanism and includes any delivery media. The term "modulated data signal" means a signal that has one or more of its characteristics changed or set in a manner so as to encode information in the signal. By way of example, and not limitation, communication media includes wired media such as a wired network or direct-wired connection, and wireless media such as acoustic, RF, infrared and other wireless media. Combinations of the any of the above are also included within the scope of computer-readable media.

By way of example, and not limitation, computer storage media may include volatile and non-volatile, removable and non-removable media implemented in any method or technology for storage of information such as computer-readable instructions, data structures, program modules or other data. For example, computer storage media includes, but is not limited to, RAM, ROM, EPROM, EEPROM, flash memory or other solid-state memory technology, CD-ROM, digital versatile disks ("DVD"), HD-DVD, BLU-RAY, or other optical storage, magnetic cassettes, magnetic tape, magnetic disk storage or other magnetic storage devices, or any other medium which can be used to store the desired information and which can be accessed by the client device 116. For purposes of the claims, the phrase "computer storage medium," "computer-readable storage medium," and variations thereof, does not include waves, signals, and/or other transitory and/or intangible communication media, per se.

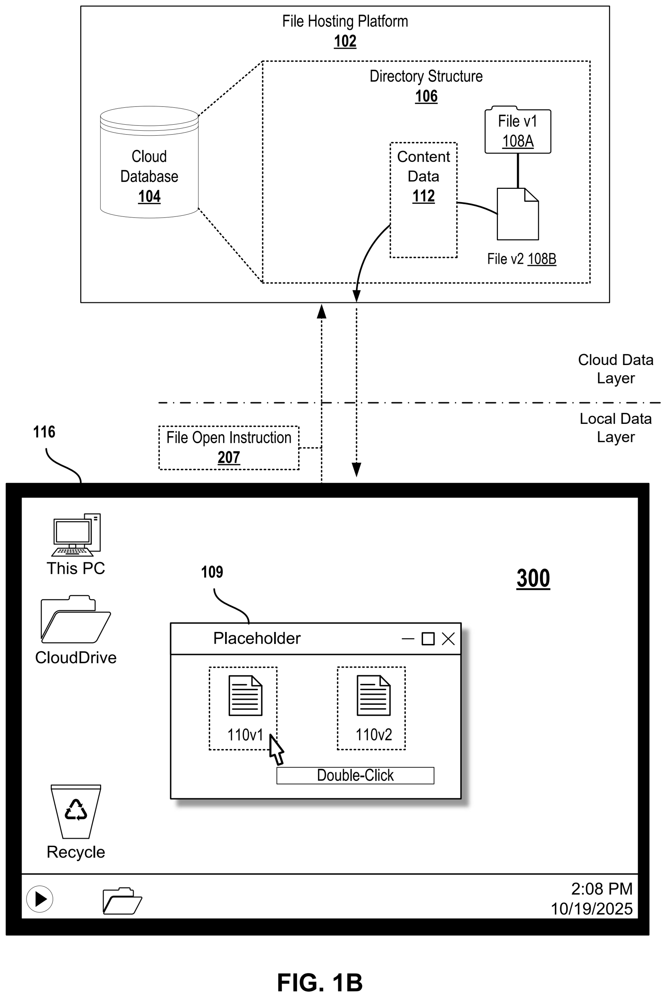

The I/O controller 134 may receive and process input from a number of other devices, including a keyboard, mouse, or electronic stylus (not shown in FIG. 1). Similarly, the I/O controller 134 may provide output to a display screen (e.g., to display the file-browser GUI described herein), a printer, or other type of output device (also not shown in FIG. 1). The network interface 136 may enable the client device 116 to connect to one or more network(s) 114 such as a local area network (LAN), a wide area network (WAN), a wireless local area network (WLAN), or any other suitable network for passing information between the client device 116 and the file hosting platform 102 over a connection 140.

Referring to FIG. 1B, an example file-browser GUI 300 is illustrated that can be displayed at the client device 116 in association with the user application 118 to enable a user to enter commands for file or folder operations within the directory structure 106.

In some embodiments, the file-browser GUI 300 may be configured to graphically indicate a status for file v1 108A that has been used to generate a variant file v1 108B. In the illustrated example, the file-browser GUI 300 is graphically representing files within the placeholder 109 along with an indication of a status for each of the files within placeholder 109 that includes variations 110v1 and 110v2 that correspond to file v1 108A and file v2 108B.

Referring to FIG. 1B, illustrated is an example where the user is performing a double-click on the icon representing file 110v1 in placeholder file 109 to open file 110v1. Based on the open command, the user application 118 generates selection data that indicates the file 110v1 should be opened. As further illustrated, the client device 116 may generate the open instruction 207 based on the selection data and, ultimately, may transmit at least some aspects of the open instruction 207 to the file hosting platform 102. In the illustrated example, the file-browser GUI 300 is graphically representing placeholder 109 and files 110v1 and 110v2.

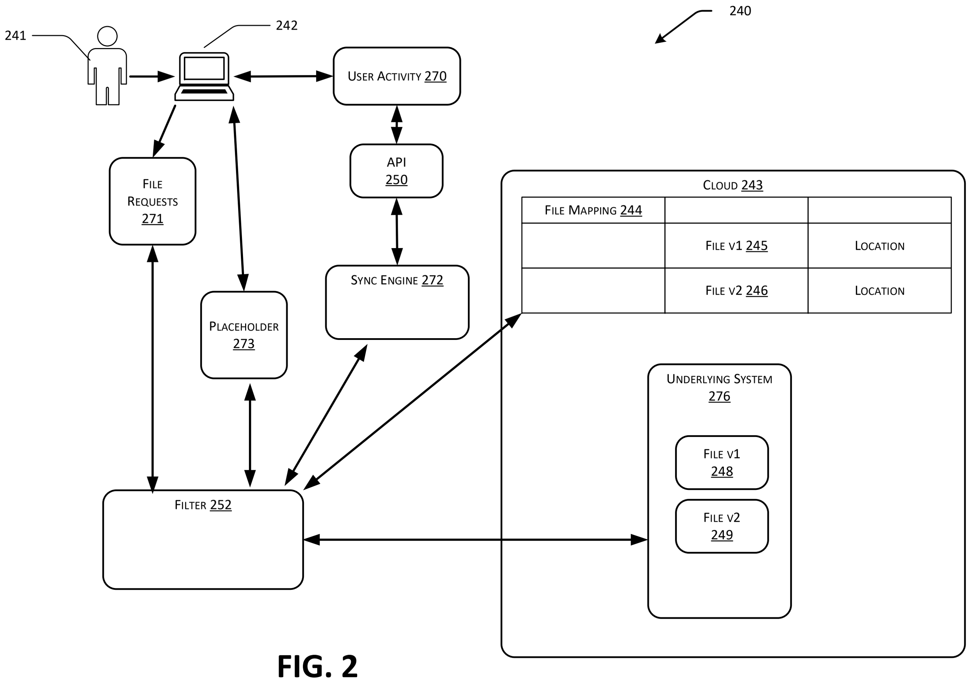

With reference to FIG. 2, a file system framework 240 is implemented for implementing a file system. Information is received indicating one or more file versions 248, 249 that are associated with a context of user activity 270 of a user 241. In one embodiment, the information is received via API 250. Based on the information, a polymorphic placeholder 273 is generated that is associated with one or more file versions 248, 249. In an embodiment, file versions 248, 249 are selected based on a threshold criterion for being variants of one another. In one example, the files can be intelligently selected based on historical access patterns, metadata, and file content. In an embodiment, the polymorphic placeholder 273 and associated files are abstracted from underlying storage locations, which can be located in a distributed computing system. In an example, the threshold can include: identical filename with different extension, identical filename in specified percentage of the characters, identical filename except for an appended date or version indication in a portion of the filename, etc.

The polymorphic placeholder 273 and file versions 248, 249 are rendered on a user interface 242 indicating the file versions 248, 249 as files within the file system. In some embodiments, the file versions 248, 249 are dehydrated. A mapping 244 is generated of the version files 245, 246 to underlying files 248, 249 represented by the version files 245, 246 and their storage locations. In an embodiment, the mapping 244 may be maintained in the cloud platform 243. The underlying files 248, 249 can be on an underlying system 276.

A filter 252 can be run that is configured to intercept requests 271 to access the version files 245, 246 that requires a hydration of a selected version file when selected via the polymorphic placeholder 273 on the user interface. The filter 252 can cause hydration of the selected version file from its corresponding underlying location and send corresponding file data for rendering on the user interface 242. The filter 252 can also be configured to synchronize changes made to the selected and retrieved version file with its corresponding underlying storage location represented by the retrieved file. In some implementations, a synchronization engine 272 can be run to facilitate file synchronization activities.

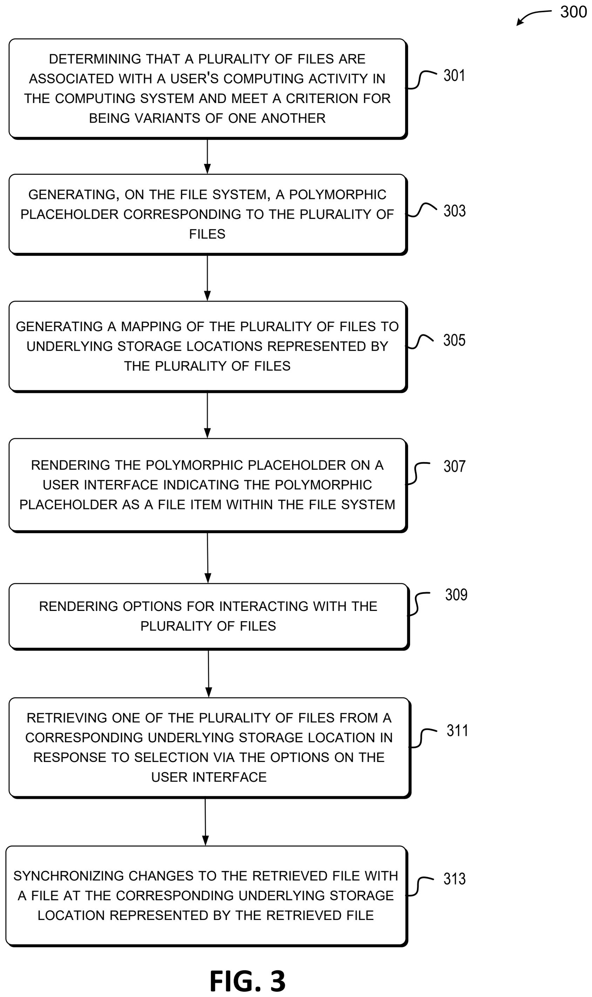

Turning now to FIG. 3, illustrated is an example operational procedure for implementing placeholder files in a file system for managing data in a computing system. It should be understood by those of ordinary skill in the art that the operations of the methods disclosed herein are not necessarily presented in any particular order and that performance of some or all of the operations in an alternative order(s) is possible and is contemplated. The operations have been presented in the demonstrated order for ease of description and illustration. Operations may be added, omitted, performed together, and/or performed simultaneously, without departing from the scope of the appended claims.

It should also be understood that the illustrated methods can end at any time and need not be performed in their entireties. Some or all operations of the methods, and/or substantially equivalent operations, can be performed by execution of computer-readable instructions included on a computer-storage media, as defined herein. The term "computer-readable instructions," and variants thereof, as used in the description and claims, is used expansively herein to include routines, applications, application modules, program modules, programs, components, data structures, algorithms, and the like. Computer-readable instructions can be implemented on various system configurations, including single-processor or multiprocessor systems, minicomputers, mainframe computers, personal computers, hand-held computing devices, microprocessor-based, programmable consumer electronics, combinations thereof, and the like. Although the example routine described below is operating on a computing device, it can be appreciated that this routine can be performed on any computing system which may include a number of computers working in concert to perform the operations disclosed herein.

Thus, it should be appreciated that the logical operations described herein are implemented (1) as a sequence of computer implemented acts or program modules running on a computing system such as those described herein and/or (2) as interconnected machine logic circuits or circuit modules within the computing system. The implementation is a matter of choice dependent on the performance and other requirements of the computing system. Accordingly, the logical operations may be implemented in software, in firmware, in special purpose digital logic, and any combination thereof.

Referring to FIG. 3, operation 301 illustrates determining that a plurality of files are associated with a user's computing activity in the computing system and meet a criterion for being variants of one another.

Operation 303 illustrates in response to the determining, generating, on the file system, a polymorphic placeholder corresponding to the plurality of files. In an embodiment, the plurality of files are selected based on a threshold relevance to the criterion.

Operation 305 illustrates generating a mapping of the plurality of files to underlying storage locations represented by the plurality of files.

Operation 307 illustrates rendering the polymorphic placeholder on a user interface indicating the polymorphic placeholder as a file item within the file system, wherein the plurality of files are hidden from view when the polymorphic placeholder is rendered.

Operation 309 illustrates in response to a user interaction with the polymorphic placeholder, rendering options for interacting with the plurality of files.

Operation 311 illustrates based on the mapping, retrieving one of the plurality of files from a corresponding underlying storage location in response to selection via the options on the user interface.

Operation 313 illustrates based on the mapping, synchronizing changes to the retrieved file with a file at the corresponding underlying storage location represented by the retrieved file.

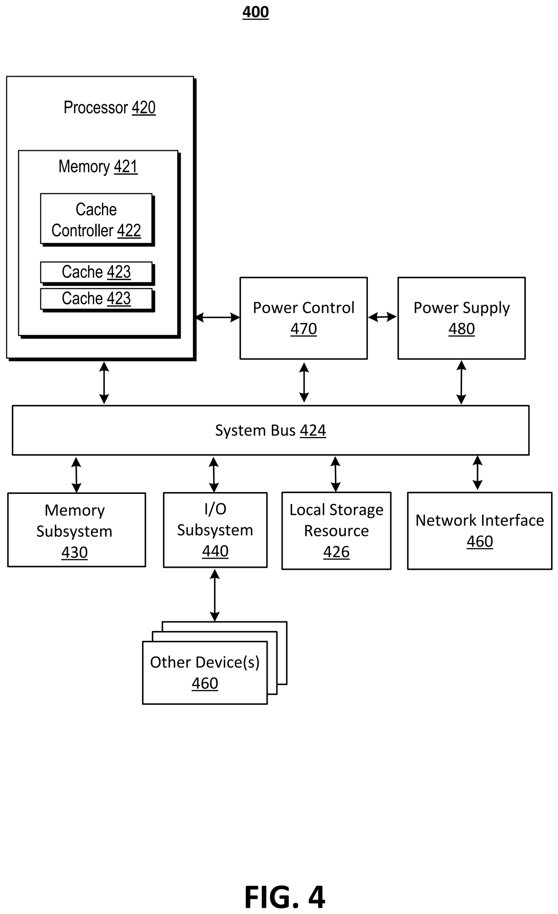

FIG. 4 illustrates a block diagram depicting selected elements of an embodiment of a computing environment 400. As described herein, computing environment 400 may represent a computing device such as a personal computer system, a desktop computer, a server, etc. As shown in FIG. 4, components of computing environment 400 may include, but are not limited to, processor subsystem 420, which may comprise one or more processors, and system bus 424 that communicatively couples various system components to processor subsystem 420 including, for example, a memory subsystem 430, an I/O subsystem 440, local storage resource 426, and a network interface 460. System bus 424 may represent a variety of suitable types of bus structures, e.g., a memory bus, a peripheral bus, or a local bus using various bus architectures in selected embodiments. For example, such architectures may include, but are not limited to, Micro Channel Architecture (MCA) bus, Industry Standard Architecture (ISA) bus, Enhanced ISA (EISA) bus, Peripheral Component Interconnect (PCI) bus, PCI-Express bus, HyperTransport (HT) bus, and Video Electronics Standards Association (VESA) local bus.

In FIG. 4, network interface 460 may be a suitable system, apparatus, or device operable to serve as an interface between computing environment 400 and a network (not shown in FIG. 4). Network interface 460 may enable computing environment 400 to communicate over the network using a suitable transmission protocol and/or standard, including, but not limited to, transmission protocols and/or standards. In some embodiments, network interface 460 may be communicatively coupled via the network to a network storage resource (not shown). The network coupled to network interface 460 may be implemented as, or may be a part of, a storage area network (SAN), personal area network (PAN), local area network (LAN), a metropolitan area network (MAN), a wide area network (WAN), a wireless local area network (WLAN), a virtual private network (VPN), an intranet, the Internet or another appropriate architecture or system that facilitates the communication of signals, data and/or messages (generally referred to as data). The network coupled to network interface 460 may transmit data using a desired storage and/or communication protocol, including, but not limited to, Fibre Channel, Frame Relay, Asynchronous Transfer Mode (ATM), Internet protocol (IP), other packet-based protocol, small computer system interface (SCSI), Internet SCSI (iSCSI), Serial Attached SCSI (SAS) or another transport that operates with the SCSI protocol, advanced technology attachment (ATA), serial ATA (SATA), advanced technology attachment packet interface (ATAPI), serial storage architecture (SSA), integrated drive electronics (IDE), and/or any combination thereof. The network coupled to network interface 460 and/or various components associated therewith may be implemented using hardware, software, or any combination thereof.

As depicted in FIG. 4, processor subsystem 420 may comprise a system, device, or apparatus operable to interpret and/or execute program instructions and/or process data, and may include a microprocessor, microcontroller, digital signal processor (DSP), application specific integrated circuit (ASIC), or another digital or analog circuitry configured to interpret and/or execute program instructions and/or process data. In some embodiments, processor subsystem 420 may interpret and/or execute program instructions and/or process data stored locally (e.g., in memory subsystem 430). In the same or alternative embodiments, processor subsystem 420 may interpret and/or execute program instructions and/or process data stored remotely (e.g., in a network storage resource, not shown).

As illustrated in FIG. 4, a memory subsystem 421 within processor subsystem 420 may include multiple data caches. A cache controller 422 within memory subsystem 421 may include circuitry to manage the contents of one or more caches 423. For example, cache controller 422 may include circuitry to determine when and if an individual cache line or a group of cache lines should be evicted from one of the caches in accordance with a policy. In at least some embodiments, cache controller 422 may also include circuitry to limit the amount of modified (dirty) cached data that would be flushed to persistent memory upon a system power failure or other power loss event, in response to requests and commands, or other events.

In FIG. 4, memory subsystem 430 may comprise a system, device, or apparatus operable to retain and/or retrieve program instructions and/or data for a period of time (e.g., computer-readable media). Memory subsystem 430 may comprise random access memory (RAM), electrically erasable programmable read-only memory (EEPROM), a PCMCIA card, flash memory, magnetic storage, opto-magnetic storage, and/or a suitable selection and/or array of volatile or non-volatile memory that retains data after power to its associated information handling system, such as system 400, is powered down. Local storage resource 440 may comprise computer-readable media (e.g., hard disk drive, floppy disk drive, CD-ROM, and/or other type of rotating storage media, flash memory, EEPROM, and/or another type of solid state storage media) and may be generally operable to store instructions and/or data. Each of the processes, methods and algorithms described herein may be embodied in, and fully or partially automated by, code modules executed by one or more computers or computer processors as depicted in FIG. 4. The code modules may be stored on any type of non-transitory computer-readable medium or computer storage device, such as hard drives, solid state memory, optical disc and/or the like. The processes and algorithms may be implemented partially or wholly in application-specific circuitry. The results of the disclosed processes and process steps may be stored, persistently or otherwise, in any type of non-transitory computer storage such as, e.g., volatile or non-volatile storage. For purposes of the claims, the phrase "computer storage medium," "computer-readable storage medium," and variations thereof, does not include waves, signals, and/or other transitory and/or intangible communication media, per se.

In computing environment 400, I/O subsystem 440 may comprise a system, device, or apparatus generally operable to receive and/or transmit data to/from/within computing environment 400. I/O subsystem 440 may represent, for example, a variety of communication interfaces, graphics interfaces, video interfaces, user input interfaces, and/or peripheral interfaces. As shown, I/O subsystem 440 may further communicate with various I/O devices such as a touch panel and display adapter.

As illustrated in FIG. 4, computing environment 400 may include one or more power control modules 470 and one or more power supply units (PSUs) 480. In at least some embodiments, power control modules 470 may include power distribution circuitry. In at least some embodiments, power control module(s) 470 may control the allocation of power generated by one or more of the power supply units (PSUs) 480 to other resources in computing environment 400. In some embodiments, one or more of the power control modules 470 may include a management controller (MC).

Each of the processes, methods and algorithms described in the preceding sections may be embodied in, and fully or partially automated by, code modules executed by one or more computers or computer processors. The code modules may be stored on any type of non-transitory computer-readable medium or computer storage device, such as hard drives, solid state memory, optical disc and/or the like. The processes and algorithms may be implemented partially or wholly in application-specific circuitry. The results of the disclosed processes and process steps may be stored, persistently or otherwise, in any type of non-transitory computer storage such as, e.g., volatile or non-volatile storage.

The various features and processes described above may be used independently of one another, or may be combined in various ways. All possible combinations and subcombinations are intended to fall within the scope of this disclosure. In addition, certain method or process blocks may be omitted in some implementations. The methods and processes described herein are also not limited to any particular sequence, and the blocks or states relating thereto can be performed in other sequences that are appropriate. For example, described blocks or states may be performed in an order other than that specifically disclosed, or multiple blocks or states may be combined in a single block or state. The example blocks or states may be performed in serial, in parallel or in some other manner. Blocks or states may be added to or removed from the disclosed example embodiments. The example systems and components described herein may be configured differently than described. For example, elements may be added to, removed from or rearranged compared to the disclosed example embodiments.

It will also be appreciated that various items are illustrated as being stored in memory or on storage while being used, and that these items or portions of thereof may be transferred between memory and other storage devices for purposes of memory management and data integrity. Alternatively, in other embodiments some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits (ASICs), standard integrated circuits, controllers (e.g., by executing appropriate instructions, and including microcontrollers and/or embedded controllers), field-programmable gate arrays (FPGAs), complex programmable logic devices (CPLDs), etc. Accordingly, the present invention may be practiced with other computer system configurations.

Conditional language used herein, such as, among others, "can," "could," "might," "may," "e.g." and the like, unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without author input or prompting, whether these features, elements and/or steps are included or are to be performed in any particular embodiment. The terms "comprising," "including," "having" and the like are synonymous and are used inclusively, in an open-ended fashion, and do not exclude additional elements, features, acts, operations and so forth. Also, the term "or" is used in its inclusive sense (and not in its exclusive sense) so that when used, for example, to connect a list of elements, the term "or" means one, some or all of the elements in the list.

While certain example embodiments have been described, these embodiments have been presented by way of example only, and are not intended to limit the scope of the inventions disclosed herein. Thus, nothing in the foregoing description is intended to imply that any particular feature, characteristic, step, module or block is necessary or indispensable. Indeed, the novel methods and systems described herein may be embodied in a variety of other forms; furthermore, various omissions, substitutions and changes in the form of the methods and systems described herein may be made without departing from the spirit of the inventions disclosed herein. The accompanying claims and their equivalents are intended to cover such forms or modifications as would fall within the scope and spirit of certain of the inventions disclosed herein.

The disclosure presented herein also encompasses the subject matter set forth in the following clauses:
Clause 1: A computer-implemented method for implementing placeholder files in a file system for managing data in a computing system, the method comprising:
   determining that a plurality of files are associated with a user's computing activity in the computing system and meet a criterion for being variants of one another;
   in response to the determining, generating, on the file system, a polymorphic placeholder corresponding to the plurality of files, wherein the plurality of files are selected based on a threshold relevance to the criterion;
   generating a mapping of the plurality of files to underlying storage locations represented by the plurality of files;
   rendering the polymorphic placeholder on a user interface indicating the polymorphic placeholder as a file item within the file system, wherein the plurality of files are hidden from view when the polymorphic placeholder is rendered;
   in response to a user interaction with the polymorphic placeholder, rendering options for interacting with the plurality of files;
   based on the mapping, retrieving one of the plurality of files from a corresponding underlying storage location in response to selection via the options on the user interface; and
   based on the mapping, synchronizing changes to the retrieved file with a file at the corresponding underlying storage location represented by the retrieved file.
Clause 2: The computer-implemented method of clause 1, further comprising:
   running a filter configured to intercept requests to access the plurality of files that require a hydration of a selected file; and
   hydrating the selected file from its corresponding underlying location.
Clause 3: The computer-implemented method of any of clauses 1-2, wherein the filter is configured to synchronize files with its corresponding underlying files.
Clause 4: The computer-implemented method of any of clauses 1-3, wherein the determining that the plurality of files are associated is based on information is received via an API.
Clause 5: The computer-implemented method of any of clauses 1-4, wherein the criterion comprises a file name that indicates a version of a source file.
Clause 6: The computer-implemented method of any of clauses 1-5, wherein the criterion comprises a same file name with a different extension.
Clause 7: The computer-implemented method of clauses 1-6, further comprising removing previously generated polymorphic placeholders that are no longer in use.
Clause 8: The computer-implemented method of clauses 1-7, wherein settings for when and how the polymorphic placeholders are generated are configurable by the user.
Clause 9: The computer-implemented method of clauses 1-8, wherein the settings include one or more of: whether to generate the polymorphic placeholders, when to generate the polymorphic placeholders, and how long to maintain the polymorphic placeholders.
Clause 10: The computer-implemented method of clauses 1-9, wherein the plurality of files are dehydrated until selected by the user.
Clause 11: The computer-implemented method of clauses 1-10, wherein retrieving one of the plurality of files is based on user options that identify which of the plurality of files to access when they are included in the polymorphic placeholder.
Clause 12: The computer-implemented method of clauses 1-11, wherein the plurality of files are abstracted from underlying storage locations in the computing system.
Clause 13: The computer-implemented method of clauses 1-12, wherein the options for interacting with the plurality of files comprises rendering file names for the plurality of files and current locations of the plurality of files.
Clause 14: A device comprising:
   one or more processors;
   a memory in communication with the one or more processors, the memory having computer-readable instructions stored thereupon which, when executed by the one or more processors, cause the device to:
      based on information indicating a plurality of files that are determined to be associated with a user's computing activity in a computing system running a file system and meet a criterion for being variants of one another, generating, on the file system, a polymorphic placeholder corresponding to the plurality of files, wherein the plurality of files are selected based on a threshold relevance to the criterion, and the plurality of files are abstracted from underlying storage locations in the computing system;
      generating a mapping of the plurality of files to the underlying storage locations represented by the plurality of files;
      rendering the polymorphic placeholder on a user interface indicating the polymorphic placeholder as a file item within the file system, wherein the plurality of files are hidden from view when the polymorphic placeholder is rendered;
      in response to a user interaction with the polymorphic placeholder, rendering options for interacting with the plurality of files;
      based on the mapping, retrieving one of the plurality of files from a corresponding underlying storage location when selected via the options on the user interface; and
      based on the mapping, synchronizing changes to the retrieved file with an underlying storage location represented by the retrieved file.
Clause 15: The computing system of clause 14, wherein the device is further caused to perform operations comprising:
   running a filter configured to intercept requests to access the plurality of files that require a hydration of a selected file; and
   hydrating the selected file from its corresponding underlying location; wherein the filter is configured to synchronize files with its corresponding underlying files.
Clause 16: The computing system of any of clauses 14 and 15, wherein the criterion comprises a file name that indicates a version of a source file.
Clause 17: The computing system of any of clauses 14-16, wherein the criterion comprises a same file name with a different extension.
Clause 18: The computing system of any of clauses 14-17, wherein settings for when and how the polymorphic placeholders are generated are configurable by the user.
Clause 19: The computing system of any of clauses 14-18, wherein settings for when and how the polymorphic placeholders are generated are configurable by the user, and wherein retrieving one of the plurality of files is based on user options that identify which of the plurality of files to access when they are included in the polymorphic placeholder.
Clause 20: A computer-readable storage medium comprising instructions that, when executed by a computing device, cause the computing device to perform operations comprising:
   receiving information indicating a plurality of files that are determined to be associated with a user's computing activity in in a computing system running a file system and meet a criterion for being variants of one another;
   based on the information, generating, on the file system, a polymorphic placeholder corresponding to the plurality of files, wherein the plurality of files are selected based on a threshold relevance to the criterion;
   generating a mapping of the plurality of files to underlying storage locations represented by the plurality of files;
   rendering the polymorphic placeholder on a user interface indicating the polymorphic placeholder as a file item within the file system, wherein the plurality of files are hidden from view when the polymorphic placeholder is rendered;
   in response to a user interaction with the polymorphic placeholder, rendering options for interacting with the plurality of files;
   based on the mapping, retrieving one of the plurality of files from a corresponding underlying storage location when selected via the options on the user interface; and
   based on the mapping, synchronizing changes to the retrieved file with an underlying storage location represented by the retrieved file.

## Claims

1. A computer-implemented method for implementing placeholder files in a file system for managing data in a computing system (240), the method comprising:
determining that a plurality of files (138) are associated with a user's computing activity in the computing system and meet a criterion for being variants of one another;
in response to the determining, generating, on the file system, a polymorphic placeholder (273) corresponding to the plurality of files, wherein the plurality of files are selected based on a threshold relevance to the criterion;
generating a mapping (244) of the plurality of files to underlying storage locations represented by the plurality of files;
rendering the polymorphic placeholder on a user interface (116) indicating the polymorphic placeholder as a file item within the file system, wherein the plurality of files are hidden from view when the polymorphic placeholder is rendered;
in response to a user interaction with the polymorphic placeholder, rendering options for interacting with the plurality of files;
based on the mapping, retrieving (311) one of the plurality of files from a corresponding underlying storage location in response to selection via the options on the user interface; and
based on the mapping, synchronizing (313) changes to the retrieved file with a file at the corresponding underlying storage location represented by the retrieved file.

2. The computer-implemented method of claim 1, further comprising:
running a filter configured to intercept requests to access the plurality of files that require a hydration of a selected file; and
hydrating the selected file from its corresponding underlying location.

3. The computer-implemented method of claim 2, wherein the filter is configured to synchronize files with its corresponding underlying files.

4. The computer-implemented method of claim 1, wherein the determining that the plurality of files are associated is based on information is received via an API.

5. The computer-implemented method of claim 1, wherein the criterion comprises a file name that indicates a version of a source file.

6. The computer-implemented method of claim 1, wherein the criterion comprises a same file name with a different extension.

7. The computer-implemented method of claim 1, further comprising removing previously generated polymorphic placeholders that are no longer in use.

8. The computer-implemented method of claim 1, wherein settings for when and how the polymorphic placeholders are generated are configurable by the user.

9. The computer-implemented method of claim 8, wherein the settings include one or more of: whether to generate the polymorphic placeholders, when to generate the polymorphic placeholders, and how long to maintain the polymorphic placeholders.

10. The computer-implemented method of claim 1, wherein the plurality of files are dehydrated until selected by the user.

11. The computer-implemented method of claim 1, wherein retrieving one of the plurality of files is based on user options that identify which of the plurality of files to access when they are included in the polymorphic placeholder.

12. The computer-implemented method of claim 1, wherein the plurality of files are abstracted from underlying storage locations in the computing system.

13. The computer-implemented method of claim 1, wherein the options for interacting with the plurality of files comprises rendering file names for the plurality of files and current locations of the plurality of files.

14. A device comprising:
one or more processors;
a memory in communication with the one or more processors, the memory having computer-readable instructions stored thereupon which, when executed by the one or more processors, cause the device to perform the method of any preceding claim.

15. A computer-readable storage medium comprising instructions that, when executed by a computing device, cause the computing device to perform the method of any of claims 1 to 13.
